# EUROPÄISCHE PATENTSCHRIFT

(11) **EP 2 807 427 B1**
(45) Veröffentlichungstag und Bekanntmachung des Hinweises auf die Patenterteilung: **27.07.2016**
(21) Anmeldenummer: 13701944.4
(22) Anmeldetag: 18.01.2013
(51) Int. Cl.: F24H 8/00, F23C 9/08

(54) **HEIZGERÄT MIT KONTROLLIERTER ABGASRÜCKFÜHRUNG**
HEATING DEVICE WITH CONTROLLED EXHAUST GAS RECIRCULATION
APPAREIL DE CHAUFFAGE À RECIRCULATION CONTRÔLÉE DES GAZ DE FUMÉE

(30) Priorität: 25.01.2012 TR 201200926
(43) Veröffentlichungstag der Anmeldung: 03.12.2014
(73) Patentinhaber: Robert Bosch GmbH, 70442 Stuttgart (DE)
(72) Erfinder: ALTAY, Hürrem, Murat, 35040 Bornova (TR); HULSHOF, Dik-Jan, 7161 VW Neede Hollanda (NL)
(86) Internationale Anmeldenummer: PCT/EP2013/050880
(87) Internationale Veröffentlichungsnummer: WO 2013/110545

(56) Entgegenhaltungen:
- EP-A1- 1 880 754
- EP-A1- 2 322 870
- EP-A2- 0 445 413
- EP-A2- 2 390 594
- DE-A1- 3 730 863
- DE-A1- 10 354 415
- DE-A1- 10 354 417
- US-A- 6 029 614
- US-A1- 2011 139 046
- "Brennwertkessel", , 20. Dezember 2011 (2011-12-20), Seiten 1-8, XP055080589, Gefunden im Internet: URL:http://de.wikipedia.org/w/index.php?ti tle=Brennwertkessel&oldid=97341140 [gefunden am 2013-09-23]

## Beschreibung

### GEBIET DER ERFINDUNG

Die vorhandene Erfindung betrifft Heizgeräte. Die Erfindung betrifft ein Heizgerät nach dem Oberbegriff von Anspruch 1. Ein solches Heizgerät ist aus dem Dokument EP 2 390 594 bekannt. Aufgabe der Erfindung ist die Steigerung der Leistung durch Minderung der NOₓ-Emission zu gewährleisten.

### HINTERGRUND DER ERFINDUNG

Der NOₓ-Pegel, der heutzutage bei der Klassifizierung von Brennwertgeräten (Vormischtyp) verwendet wird, beträgt für 30 kW-Kessel durchschnittlich 45 mg/kWs. NOₓ ist die allgemeine Bezeichnung für Stickoxide, die entstehen, wenn der Sauerstoff und der Stickstoff in Verbrennungsvorgängen bei hohen Temperaturen eine Reaktion eingehen. Da diese Gase (NO und NO₂) ein ernstzunehmender Luftverschmutzungsfaktor sind, ist es wichtig, sie zu kontrollieren. Aus diesem Grund ist vorgesehen, den NOₓ-Pegel, der mit Inkrafttreten der EuP-Richtlinien (Energy using products) bei der Klassifizierung verwendet wird, im Jahr 2012 stufenweise auf unter 35 mg/kWs zu senken.

Das europäische Patent mit der Nummer EP0791785A2 ist eines der Dokumente, die sich mit diesem Thema beschäftigen. Wie in Absatz 20 (Seite 4, Spalte 5, Zeile 41) des Patentes beschrieben, enthalten alle Ausführungen der Erfindung einen innovativen (regenerativen) Brenner. Unsere Erfindung beinhaltet jedoch keinen innovativen (regenerativen) Brenner. Der Hauptzweck dieser Erfindung ist zweifellos die Verwendung von mindestens einem neuartigen Brenner (regenerativen Brenner) in dem Gerät zwecks Leistungssteigerung. In einem separaten Anspruch wurde beschrieben, dass die Abgasrückführung (EGR_Exhaust Gas Recirculation) als Nebenanspruch zu dem Gerät mit neuartigem Brenner hinzugefügt werden kann, um die Emissionen zu mindern.

Wie bekannt ist,
- sinkt die Sauerstoffkonzentration des Eingangsgemischs, wenn das Abgas zum Eingangsgemisch (Reaktanden) rückgeführt wird, d.h. dass eine der Komponenten, die für die NOₓ-bildenden Reaktionen nötig sind, nicht mehr vorhanden ist.
- nehmen die wirkungslosen, rückgeführten Gase die Wärme in der Umgebung auf und senken die Flammentemperatur, wenn die Abgase zum Eingangsgemisch (Reaktanden) rückgeführt werden. Dies verhindert die Oxidation des atmosphärischen Stickstoffs, die bei hoher Temperatur eintritt, und gewährleistet, dass sich weniger NOₓ-Gas bildet.

Andererseits senkt eine übermäßige Abgasrückführung (EGR) die Flammentemperatur so sehr, dass es zu einem erheblichen Kohlenmonoxidanstieg (CO) kommt. Demzufolge muss die EGR-Rate für unterschiedliche Leistungsgewinnungen optimiert werden.

Wenn der Gehalt des rückgeführten Abgases (Konzentration) kontrolliert werden kann, kann gleichzeitig auch die Leistung des Gerätes gesteigert werden. Wenn nur Wasser injiziert oder rückgeführt wird, steigt die Wasserkonzentration des Gemischs, das durch den Wärmetauscher fließt. Infolgedessen steigt die Taupunkttemperatur der Verbrennungsgase, was bedeutet, dass die Kondensation im Brennwertgerät früher einsetzt. Das führt insbesondere bei einer höheren Rücklaufwassertemperatur zu einer Leistungssteigerung. Auf diese Weise wird selbst bei alten Anlagen, die meistens ohne Kondensation arbeiten, unter DHW-Betriebsbedingungen (domestic heating water) eine Leistungssteigerung gewährleistet.

Eine andere Methode, die heutzutage zur Minderung der NOₓ-Emission verwendet wird, ist die Senkung der Verbrennungstemperatur durch Erhöhung des Luft-Brennstoff-Verhältnisses (mehr Luft) im Verbrennungsgemisch ohne EGR. In diesem Fall sinkt jedoch die Effizienz und die maximale Leistung des Gerätes wird begrenzt. Außerdem neigt das System eher zu thermoakustischem Ungleichgewicht (Instabilität).

Um alle oben stehenden Ziele umzusetzen und die in der vorhandenen Technik existierenden Nachteile zu beseitigen, wurde ein Heizgerät entwickelt, das seine Leistung steigern kann, indem es die NOₓ-Emission mindert, und das zur Abgasrückführung (EGR) und/oder kontrollierten Abgasrückführung (selektive EGR oder SEGR) fähig ist und mindestens einen Bypass enthält, der zwischen dem Abgaskanal und dem Luftansaugrohr angeordnet ist, oder zusammen mit dem Bypass mindestens ein Membranmodul enthält.

### KURZDARSTELLUNG DER ERFINDUNG

Die Erfindung betrifft Heizgeräte, insbesondere Kessel vom Vormischtyp (Brennwertkessel), mit kontrollierter Abgasrückführung.

Die Erfindung hat den Zweck, die Nachteile beim Stand der Technik zu beseitigen und ein Brennwertgerät mit kontrollierter Abgasrückführung (SEGR) zu entwickeln, das seine Leistung steigern kann, indem es die NOₓ-Emission mindert. Die hier erwähnte kontrollierte Abgasrückführung (SEGR) muss gewährleisten, dass das Brennwertgerät gegen thermoakustische Instabilität widerstandsfähig ist, und es muss in der Heizanlage als Dämpfer eingesetzt werden können, der den Geräuschpegel senkt.

Der Erfindung zufolge wird dies mittels Anspruch 1 gelöst. Die Ausführungen, die einen Vorteil bieten, wurden in den betreffenden Ansprüchen beschrieben.

Die Erfindung betrifft ein Heizgerät mit den Merkmalen des Anspruchs 1.

Bei einer Weiterbildung des Heizgeräts hat der genannte Bypass vorzugsweise die Form eines Kanals mit rundem Querschnitt. Aufgrund der Saugkraft, die von dem Ventilator erzeugt wird, vermischt sich ein Teil des Abgases mit der Luft, die in das System gelangt, und verbrennt im Brenner.

Bei einer anderen Weiterbildung des Heizgeräts ist vorgesehen, dass in dem genannten Bypass eine Klappe angeordnet wird, in der sich eine Öffnung befindet, um die Abgasmenge, die rückgeführt werden soll, zu kontrollieren. Der Durchmesser der hier genannten Öffnung legt die Rückführrate fest. Um bei der Verwendung unterschiedlicher Brennstoffe die gleiche Leistung zu gewährleisten, können unterschiedliche Klappen mit unterschiedlichem Öffnungsdurchmesser verwendet werden. Diese können auch in Form eines Rückführungs-Kit verkauft werden. Oder es kann eine Ausführung entwickelt und verwendet werden, die die Anbringung von Öffnungen mit unterschiedlichem Durchmesser in der gleichen Klappe erlaubt.

Bei einer anderen r Weiterbildung des Heizgeräts kann der Öffnungsdurchmesser in der genannten Klappe über einen Kontrollmechanismus automatisch gesteuert werden. Diese Steuerung gewährleistet die Regelung der Rückführrate, um selbst bei unterschiedlichen Betriebsbedingungen des Gerätes stets die optimale Abgasmenge rückzuführen.

Bei einer anderen r Weiterbildung des Heizgeräts kann auf dem Bypass ein Magnetventil angeordnet sein. Dieses Ventil kann je nach Bedarf geöffnet und geschlossen werden. Um das zu entscheiden, muss bei einem Gerät bei unterschiedlichen Heizkräften (100 %, 70 %, 60 %, 40 % Leistung, minimale Leistung) der NOₓ-Pegel berechnet werden. Man erhält den endgültigen NOₓ-Gewichtswert durch Berechnung des Durchschnitts der gemessenen NOₓ-Werte. Während dieses Gewicht bei 100 % Leistung 0 ist, hat es bei minimaler Leistung den Höchstwert (0,3). Aus diesem Grund ist die Abgasrückführung bei 100 % Leistung eigentlich unnötig. Somit müssen wir uns bei 100 % Leistung keine Gedanken um die richtige Rückführmenge machen, um einem Anstieg der CO-Emission vorzubeugen. Unter diesen Bedingungen wird das Magnetventil geschlossen, bis die Heizkraft des Gerätes unter einen bestimmten Wert (d.h. max. 70 %) gefallen ist. Ist die Heizkraft unter diesen bestimmten Wert gefallen, wird das Ventil geöffnet.

Bei einer anderen Weiterbildung des Heizgeräts kann anstelle des oben genannten Magnetventils, das am Bypass angeordnet ist, ein Dosierventil verwendet werden, das seinen Öffnungsdurchmesser (Schmetterlingsventil, Guillotine, ...) bei unterschiedlichen Heizkräften unter Verwendung eines Kontrollalgorithmus automatisch einstellt. Aus diesem Grund ist ein fein eingestelltes, kontrolliertes Verbrennungssystem eine andere Ausführungsmöglichkeit.

Gemäß der Erfindung wird eine selektive Membran in den Bypass oder in den Abgaskanal vor dem Bypass direkt in der Nähe des Ausgangs der Heizkammer angeordnet. Diese Vorrichtung oder Membran filtriert nur das Wasser und/oder das Kohlendioxid (CO₂). Auf diese Weise lässt die Membran nur die Wasserdampf- und/oder CO₂-Zirkulation durch den Bypass zu. Somit sinkt aufgrund der Wasserdampfzirkulation die Flammentemperatur, was die Minderung der NOₓ-Emission, die Erhöhung der Taupunkttemperatur der Abgase und die Leistungssteigerung zur Folge hat.

Das oben genannte Membranmodul wird als vom Bypass getrennter Teil direkt nach dem Wärmetauscher in den im Abgaskanal befindlichen Rauchgasweg angeordnet oder bei der Montage des Kaminrohrs auf dem Heizgerät in das Kaminrohr montiert (integriert). Das genannte Membranmodul kann aus Röhren mit selektiver Beschichtung bestehen. Die selektive Beschichtung ist nur für Wasser und/oder Kohlendioxid durchlässig. Wenn es mit der Verbrennungsluft (Frischluft) im Querstrom (maximale Transferleistung) angeordnet wird, werden die Temperatur und der Stoff (H₂O, CO₂) von den Abgasen zur Verbrennungsluft transferiert. Der Transfervorgang erfolgt dank dieser Technologie mit niedrigem Energieaufwand. Die Membrantechnologie wird z.B. zur Wasserreinigung oder Abwasseraufbereitung eingesetzt. Sie verläuft in 3 Schritten: Absorption, Diffusion und Desorption. Die Triebkraft des Stoffübergangs ist grundsätzlich der Konzentrationsgradient und die Partialdruckdifferenz. Dieser zusätzliche Wärmetransfer, den die Membran bewirkt, ermöglicht unter Berücksichtigung des gesamten Betriebsbereichs eine noch größere Leistungssteigerung. Ein anderer Vorteil dieses zusätzlichen Wärmetransfers ist die gesteigerte Widerstandskraft der Ausgangsysteme des Brenners/Wärmetauschers und die geringere Empfindlichkeit des Systems gegenüber thermoakustischen Vibrationen.

Die weiteren Vorteile des Stoffübergangs (insbesondere des H₂O-Dampfes) und/oder der Verwendung des Membranmoduls lauten, wie folgt:
- weniger aggressive Kondensation (höherer pH-Wert), eventuell niedrige Korrosion und geringerer Neutralisierungsbedarf (z.B. Vorteil auf dem deutschen Markt),
- geringere Sichtbarkeit der Kondensationsweges (d.h. das Sichtbarwerden des Wasserdampfes, der aus dem Kamin austritt, insbesondere bei kaltem Wetter) (dies kann z.B. als Verkaufsargument auf dem englischen Markt gelten),
- niedrigerer Geräuschpegel des Gerätes durch Kombinierung mit einem (geräuschreduzierenden) Dämpfer.

Weil das rückgeführte Abgas bei allen vorstehend genannten Ausführungen Wasserdampf enthält, besteht ein Korrosionsrisiko für die Bauteile des Brenners bzw. des Saugventilators. Dieser Nachteil kann jedoch leicht beseitigt werden, indem das Material des Brenners und der Ventilatorkugellager durch rostfreien Edelstahl ersetzt wird.

### ERLÄUTERUNG DER FIGUREN

Die strukturellen und charakteristischen Eigenschaften und alle Vorteile der Erfindung gehen aus den unten stehenden Figuren und der detaillierten Beschreibung hervor, in der auf diese Figuren verwiesen wird. Aus diesem Grund muss die Bewertung unter Berücksichtigung dieser Figuren und der detaillierten Beschreibung erfolgen.
Figur 1 ist die schematische Darstellung des Entwurfs des Heizgerätes, das Gegenstand einer Ausbildung der Erfindung ist.
Figur 2 zeigt detailliert das Abgasende und die Klappe des Bypasses, die sich im Abgaskanal befinden.
Figur 3 ist die schematische Darstellung der Anordnung des Membranmoduls als getrennter Teil vom Bypass.
Figur 4 ist die grafische Darstellung der Temperaturveränderung, die infolge des Querstroms in Figur 3 entsteht.
Figur 5 ist die perspektivische Darstellung des Membranmoduls von der Seite.
Figur 6 zeigt detailliert, wie das Abgas, das durch das Membranmodul in Figur 5 strömt, in den Röhren filtriert wird.
Figur 7 ist die grafische Darstellung der Stoffübergangswerte der verschiedenen Stoffe, während sich das Membranmodul in Figur 5 im Querstrom befindet.
Figur 8 zeigt das Funktionsprinzip des Membranmoduls in Figur 5 in Form eines Flussdiagramms.
Figur 9 zeigt das Funktionsprinzip des Membranmoduls in Figur 5 in Form einer Grafik.

### REFERENZNUMMERN

1. Heizgerät
2. Kaminrohr
3. Frischluft (-strom)
4. Gasventil
5. Abgas (Rauchgas) (-strom)
6. Gas-Frischluft-Abgas-Gemisch
7. Heizkammer
8. Brenner
9. Flamme
10. Gas-Wasser-Wärmetauscher
11. Kaltwasserzulauf
12. Warmwasserablauf
13. Wasserrohr (des Wärmetauschers)
14. Gas (-strom)
15. Mischeinheit
16. Ventilator
17. Abgasregler (-klappe)
18. Rückgeführtes Abgas
19. Frischluft-Abgas-Gemisch
20. Ventil
21. Membran (-modul)
   21.1. Membranröhre
   21.2. Selektive Beschichtung
   21.3. Röhrenstützhilfe (potting)
   21.4. Isolierverkleidung
   21.5. Effiziente Länge
22. Bypass
   22.1. Abgasende
   22.2. Frischluftende
23. Frischluftansaugrohr
24. Abgaskanal
25. Bypassklappe
   25.1. Öffnung
26. Siphon
27. Kondenswasser
28. Kondenswasser-Ablassrohr
29. Hydraulikeinheit
   M_{A}-Querschnitt: Ein Anordnungsort des Membranmoduls
   M_{B}-Querschnitt: Ein Anordnungsort des Membranmoduls

### DETAILLIERTE BESCHREIBUNG EINER AUSBILDUNG DER ERFINDUNG

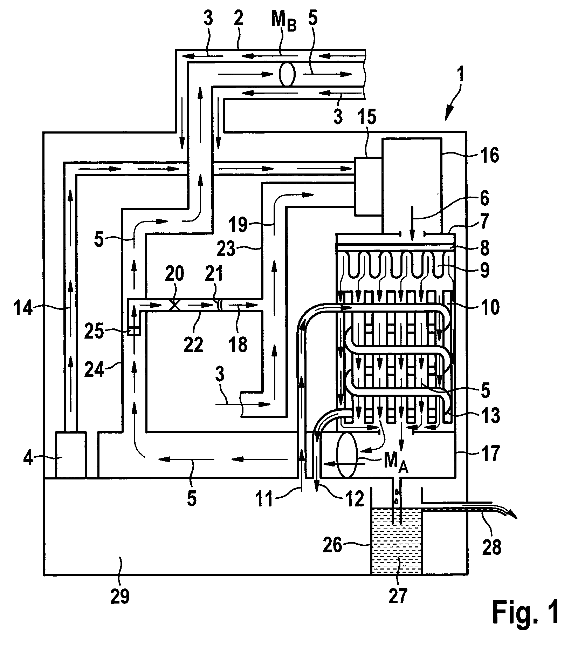

Figur 1 ist die schematische Darstellung des Entwurfs des Heizgerätes (1), das Gegenstand einer Ausbildung der Erfindung ist. Die Heizgeräte (1) vom Stand der Technik, die Gas als Brennstoff verwenden, enthalten grundsätzlich: eine Heizkammer (7), die einen Brenner (8), einen Gas-Wasser-Wärmetauscher (10) und ein Wasserrohr (13) enthält; einen Ventilator (16), der das Gas- (14) und Frischluft (3) - Gemisch ansaugt und zur Heizkammer (7) transportiert und mit der Heizkammer (7) verbunden ist; eine Mischeinheit (15), die das Gas (14) und die Frischluft (3) vermischt, bevor sie in die Heizkammer (7) gelangen; ein Frischluftansaugrohr (23), das die Frischluft (3) zur Mischeinheit (15) transportiert; eine Hydraulikeinheit (29), die einen Kaltwasserzulauf (11) zur Heizkammer (7) und einen Warmwasserablauf (12) aus der Kammer (7) enthält; ein Gasventil (4), das die Menge des Gases (14) regelt, die in die Heizkammer (7) strömt; einen Siphon (26), in dem sich das Kondenswasser (27) aus der Heizkammer (7) sammelt und der ein Ablassrohr (28) aufweist, um das überschüssige Wasser (27) abzulassen; einen Abgaskanal (24), der gewährleistet, dass das Abgas (5) aus der Heizkammer (7) nach draußen geleitet wird; einen Abgasregler (17), der das Abgas (5) aus der Heizkammer (7) in den Abgaskanal (24) leitet; und ein Kaminrohr (2), das die Frischluftzufuhr (3) zum Heizgerät (1) und gleichzeitig die Ableitung des darin befindlichen Abgases (5) gewährleistet.

E1 (Ausführung 1): Das Heizgerät (1), das einer Ausbildung der Erfindung ist, enthält außer den oben genannten Elementen einen Bypass (22), der zwischen dem Abgaskanal (24) und dem Frischluftansaugrohr (23) angeordnet ist, um einen Teil des Abgases (5), das durch den genannten Abgaskanal (24) strömt, zum Frischluftansaugrohr (23) zu leiten und die Abgasrückführung (EGR) zu gewährleisten.

Der genannte Bypass (22) hat vorzugsweise die Form eines Kanals mit rundem Querschnitt. Ein Teil des Abgases (5), das durch die Saugkraft, die vom Ventilator (16) erzeugt wird, aus dem Abgaskanal (24) angesaugt wird, vermischt sich zunächst mit der Frischluft (3), die in das Heizgerät (1) gelangt, und vermischt sich später mit dem Gas (14) in der Mischeinheit (15), sodass das Gas-Frischluft-Abgasgemisch (6) entsteht. Das genannte Gemisch (6) verbrennt anschließend im Brenner (8).

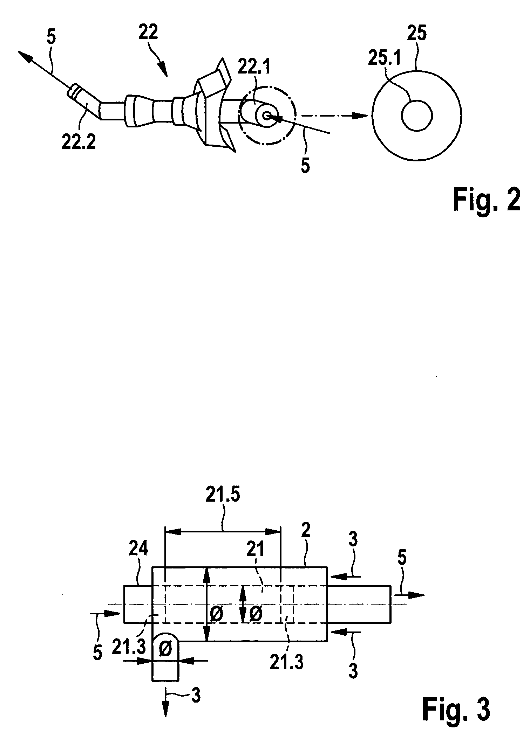

E2 (Ausführung 2): Bei einer alternativen Ausführung des Heizgerätes (1), das Gegenstand einer Ausbildung der Erfindung ist, ist vorgesehen, dass in dem genannten Bypass (22) eine Klappe (25) angeordnet wird, in der sich eine Öffnung (25.1) befindet, um die Menge des Abgases (5), das rückgeführt werden soll, zu kontrollieren. Figur 2 zeigt detailliert das Abgasende (22.1) und die Klappe (25) des Bypasses (22), die sich im Abgaskanal (24) befinden. Dementsprechend ist das andere Ende das Frischluftende (22.2), das mit dem Frischluftansaugrohr (23) verbunden ist.

Der Durchmesser der Öffnung (25.1) am Abgasende (22.1) des Bypasses (22) bestimmt die Abgasrückführrate. Deshalb können unterschiedliche Klappen (25) verwendet werden, deren Öffnung (25.1) einen unterschiedlichen Durchmesser besitzt, um bei der Verwendung unterschiedlicher Brennstoffe die gleiche Leistung zu gewährleisten. Diese können auch in Form eines Rückführungs-Kit verkauft werden. Oder es kann eine Ausführung entwickelt und verwendet werden, die die Anbringung von Öffnungen (25.1) mit unterschiedlichem Durchmesser in der gleichen Klappe (25) erlaubt.

E3 (Ausführung 3): Bei einer anderen alternativen Ausführung des Heizgerätes (1), das Gegenstand einer Ausbildung der Erfindung ist, kann der Durchmesser der Öffnung (25.1) in der in Ausführung 2 genannten Klappe (25) über einen Kontrollmechanismus automatisch gesteuert werden. Diese Steuerung gewährleistet die Regelung der Rückführrate, um selbst bei unterschiedlichen Betriebsbedingungen des Gerätes stets die optimale Abgasmenge rückzuführen.

E4 (Ausführung 4): Bei einer anderen alternativen Ausführung des Heizgerätes (1), das Gegenstand einer Ausbildung der Erfindung ist, kann auf den in Ausführung 1 genannten Bypass (22) ein Magnetventil (20) angeordnet werden (s. Figur 1). Dieses Ventil (20) kann je nach Bedarf geöffnet und geschlossen werden.

Um zu entscheiden, wann das Ventil (20) geöffnet und geschlossen wird, kann bei einem Gerät (1) bei unterschiedlichen Heizkräften (100 %, 70 %, 60 %, 40 % Leistung, minimale Leistung) der NOₓ-Pegel berechnet werden. Durch Berechnung des Durchschnitts der NOx-Werte, die hier gemessen wurden, erhält man den endgültigen NOx-Gewichtswert. Während dieses Gewicht bei 100 % Leistung 0 ist, hat es bei minimaler Leistung den Höchstwert (0,3). Aus diesem Grund ist die Abgasrückführung bei 100 % Leistung eigentlich unnötig. Somit ist es bei 100 % Leistung nicht nötig, dass eine Rückführung in der richtigen Menge stattfindet, um einem Anstieg der CO-Emission vorzubeugen. Unter diesen Umständen wird das Ventil (20) solange geschlossen, bis die Heizkraft des Gerätes (1) unter einen bestimmten Wert (d.h. max. 70 %) gefallen ist. Ist die Heizkraft unter diesen bestimmten Wert gefallen, wird das Ventil (20) wieder geöffnet.

E5 (Ausführung 5): Bei einer anderen alternativen Ausführung des Heizgerätes (1), das Gegenstand einer Ausbildung der Erfindung ist, kann anstelle des in Ausführung 4 genannten Magnetventils (20), das an dem Bypass (22) angeordnet ist, ein Dosierventil (20) verwendet werden, das seinen Öffnungsdurchmesser (Schmetterlingsventil, Guillotine, ...) bei unterschiedlichen Heizkräften unter Verwendung eines Kontrollalgorithmus automatisch einstellt. Aus diesem Grund kann ein fein eingestelltes, kontrolliertes Verbrennungssystem als eine andere Ausführungsmöglichkeit angesehen werden.

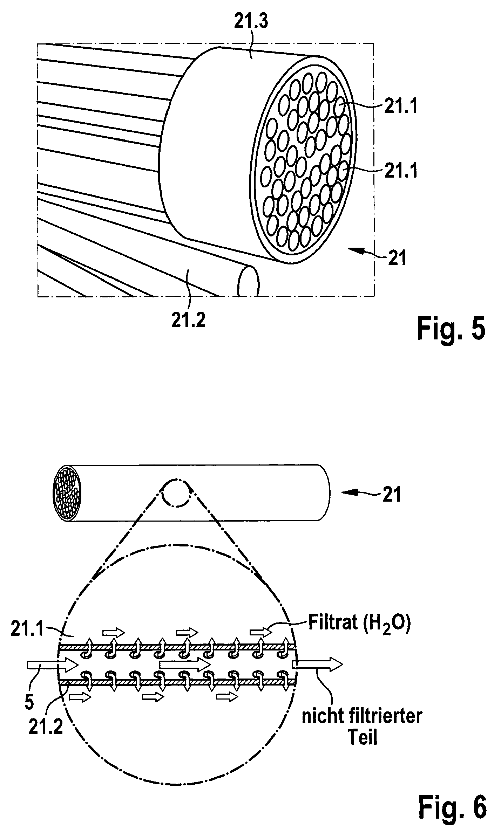

E6 (Ausführung 6): Gemäß der Erfindung wird in den Bypass (22) ein selektives Membranmodul (21) angeordnet (s. Figur 1 und Figur 5). Dieses Membranmodul (21) ist nur für Wasserdampf (H₂O) und/oder Kohlendioxid (CO₂) durchlässig. Aufgrund der Wasserdampf- und/oder CO₂-Zirkulation sinkt die Flammentemperatur, was die Minderung der NOx-Emission, die Erhöhung der Taupunkttemperatur des Abgases (5) und die Leistungssteigerung zur Folge hat.

Figur 5 ist die perspektivische Darstellung des Membranmoduls (21) von der Seite. Das genannte Membranmodul (21) besteht aus Röhren (21.1), die mit einer selektiven Beschichtung (21.2) beschichtet sind. Die selektive Beschichtung (21.1) ist nur für Wasser und/oder Kohlendioxid durchlässig.

Figur 6 zeigt detailliert, wie das Abgas (5), das durch das Membranmodul (21) in Figur 5 strömt, in der Membranröhre (21.1) filtriert wird. Das Filtrat, das hier durch die selektive Beschichtung (21.2) filtriert wird, ist das Wasser oder Kohlendioxid, das aus dem Abgas (5) getrennt wird. Der Teil, der nicht filtriert wurde, wird zusammen mit dem Abgas (5) nach außen abgegeben.

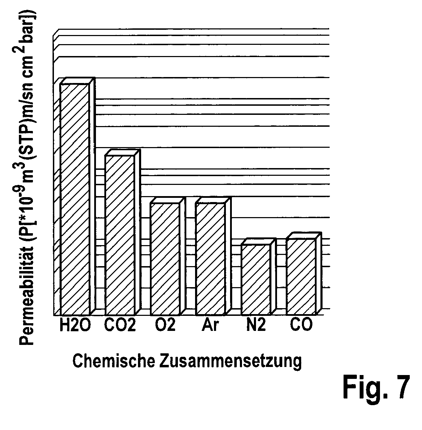

Figur 7 ist die grafische Darstellung der Stoffübergangswerte der verschiedenen chemischen Stoffe, während sich das Membranmodul (21) in Figur 5 im Querstrom befindet. Dementsprechend sind die Stoffe mit der häufigsten Permeation der Reihe nach H₂O und CO₂.

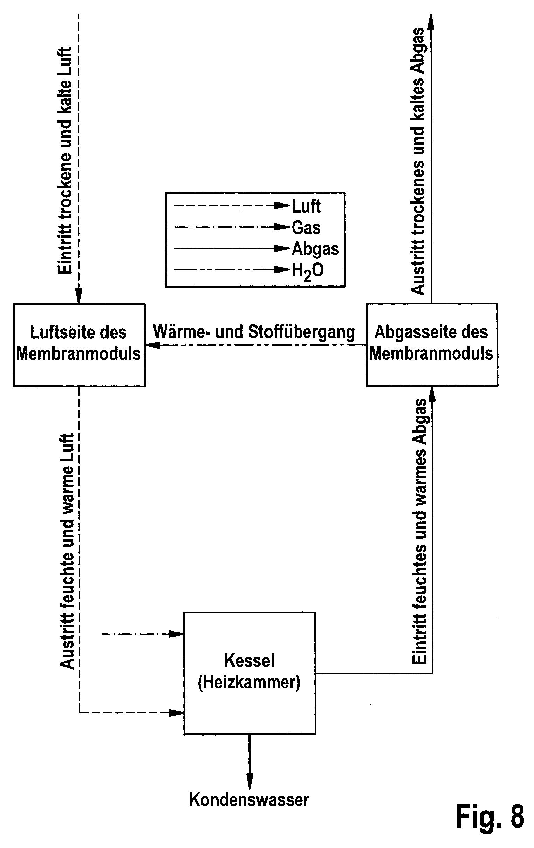

Figur 8 zeigt das Funktionsprinzip des Membranmoduls (21) in Figur 5 in Form eines Flussdiagramms. Wenn es mit der Verbrennungsluft (Frischluft) (3) im Querstrom (maximale Transferleistung) angeordnet wird, werden die Temperatur und der Stoff (H₂O, CO₂) von den Abgasen (5) zur Verbrennungsluft (3) transferiert. Die Membrantechnik besteht aus 3 Schritten: Absorption, Diffusion und Desorption. Die Triebkraft des Stoffübergangs ist grundsätzlich der Konzentrationsgradient und die Partialdruckdifferenz.

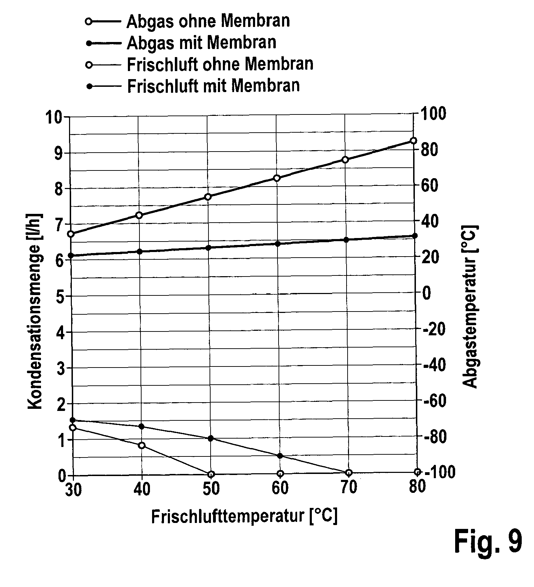

Figur 9 zeigt das Funktionsprinzip des Membranmoduls (21) in Figur 5 in Form eines Flussdiagramms. Wenn das Membranmodul (21) verwendet wird, sinkt demzufolge die Temperatur des Abgases (5) aufgrund des Wärmetransfers, der vom Abgas (5) zur Luft (3) erfolgt. Das weist wiederum darauf hin, dass die Leistung des Gerätes (1) gestiegen ist. Da außerdem die Kondensationsmenge und die Taupunkttemperatur bei vorhandener Membran (21) steigen, ist dies ebenfalls ein Indikator für die Steigerung der Leistung.

E6a (Ausführung 6a): Das oben genannte Membranmodul (21) wird als vom Bypass (22) getrennter Teil in den Abgaskanal (24) vor dem Bypass (22) in unmittelbarer Nähe des Ausgangs der Heizkammer (7) im Abgas (5) weg des Abgaskanals (24) (in den M_{A}-Querschnitt) angeordnet, oder bei der Montage des Kaminrohrs (2) auf dem Heizgerät (1) im Abgaskanal (24) integriert in das Kaminrohr (2) (in den M_{B}-Querschnitt) montiert (integriert) (das Bypassmodul kann sich sowohl an den hier erläuterten Orten als auch gleichzeitig separat im Bypassrohr befinden).

Figur 3 ist die schematische Darstellung der Integration des Membranmoduls (21) als vom Bypass (22) getrennter Teil im Abgaskanal (24) (M_{B}-Querschnitt), der durch das Kaminrohr (2) führt. Der Frischluftstrom (3) tritt hier über den Zwischenraum zwischen dem Kaminrohr (2) und dem Abgaskanal (24) in das Heizgerät (1) ein. Währenddessen strömt das Abgas (5), das über den Abgaskanal (24) aus dem Heizgerät (1) nach draußen geleitet wird, durch das Membranmodul (21).

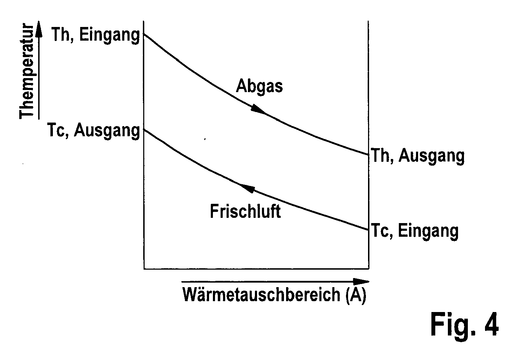

Figur 4 ist die grafische Darstellung der Temperaturveränderung, die infolge des Querstroms in Figur 3 entsteht. Demzufolge erfolgt der Wärmetransfer (entlang) Bereich A oder in der effizienten Länge (21.5) des Membranmoduls (21), in denen das Abgas (5) und die Frischluft (3) aufeinandertreffen. Das Abgas (5) kühlt sich ab, während sich die Frischluft (3) erwärmt. Die exakten Abmessungen des Bypasses (22), der bei allen genannten Ausführungen vorhanden ist, des darauf befindlichen Ventils (20) oder der darin befindlichen Klappe (25) und der Öffnung (25.1) wurden im Rahmen der Ausbildung der Erfindung nach angegeben. Denn die Abgasrückführrate ist, auch wenn sie von diesen Elementen kontrolliert wird, von der Leistung des Heizgerätes (1), der Art des verwendeten Gases (14) und dem Luft-Brennstoff-Verhältnis abhängig. Daher ist es unmöglich, an dieser Stelle die exakten Abmessungen der Rohrinstallation zu geben, weil die genannten Maße unter unterschiedlichen Bedingungen verschieden sein können.

## Patentansprüche

1. Ein Heizgerät (1), das folgendes enthält: eine Heizkammer (7), die einen Brenner (8), einen Gas-Wasser-Wärmetauscher (10) und ein Wasserrohr (13) enthält; ein Ventilator (16), der das Gas (14) - Frischluft (3) - Gemisch ansaugt und zur Heizkammer (7) transportiert und mit der Heizkammer (7) verbunden ist; eine Mischeinheit (15), die das Gas (14) und die Frischluft (3) vermischt, bevor sie in die Heizkammer (7) gelangen; ein Frischluftansaugrohr (23), das die Frischluft (3) zur Mischeinheit (15) transportiert; einen Kondensatsammler (26), in dem sich das Kondenswasser (27) aus der Heizkammer (7) sammelt und der ein Ablassrohr (28) aufweist, um das überschüssige Wasser (27) abzulassen; ein Abgaskanal (24), der gewährleistet, dass das Abgas (5) aus der Heizkammer (7) nach draußen geleitet wird; einen Abgasregler (17), der das Abgas (5) aus der Heizkammer (7) in den Abgaskanal (24) leitet; ein Kaminrohr (2), das die Zufuhr von Frischluft (3) zum Heizgerät (1) und gleichzeitig die Ableitung des darin befindlichen Abgases (5) gewährleistet; wobei es einen Bypass (22) enthält, der zwischen dem Abgaskanal (24) und dem Frischluftansaugrohr (23) angeordnet ist, um einen Teil des Abgases (5), das durch den genannten Abgaskanal (24) strömt, zum Frischluftansaugrohr (23) zu leiten und die Abgasrückführung (EGR) zu gewährleisten, **dadurch gekennzeichnet**,
das das Heizgerät eine Hydraulikeinheit (29) und ein Gasventil enthält, wobei die Hydraulikeinheit einen Kaltwasserzulauf (11) zur Heizkammer (7) und einen Warmwasserablauf (12) aus der Kammer (7) enthält; und wobei das Gasventil (7) die Menge des Gases (14) regelt, das in die Heizkammer (7) strömt; und dass der Kondensatsammler als Siphon ausgebildet ist; und dass es außerdem mindestens ein selektives Membranmodul (21) enthält, dass das genannte Membranmodul (21) aus Membranröhren (21.1) besteht, die mit einer selektiven Beschichtung (21.2) beschichtet sind, die nur für Wasserdampf (H2O) und/oder Kohlendioxid (CO2) durchlässig ist und dass
- das genannte Membranmodul (21) im Bypass (22),
- das genannte Membranmodul (21) in dem Teil des Abgaskanals (24) in unmittelbarer Nähe des Ausgangs der Heizkammer (7) im Abgasweg (5) des Abgaskanals (24) (MA-Querschnitt),
- das genannte Membranmodul (21) integriert im Abgaskanal (24), der durch das Kaminrohr (2) verläuft (MB-Querschnitt), separat an einem oder mehreren dieser Orte angeordnet ist.

2. Ein Heizgerät (1) nach Anspruch 1, **dadurch gekennzeichnet, dass** der genannte Bypass (22) die Form eines Kanals mit rundem Querschnitt besitzt.

3. Ein Heizgerät (1) nach Anspruch 1 oder 2, **dadurch gekennzeichnet, dass** der genannte Bypass (22) mindestens ein Abgasende (22.1), das in den Abgaskanal (24) hineinreicht, und ein Frischluftende (22.2), das mit dem Frischluftansaugrohr (23) verbunden ist, besitzt.

4. Ein Heizgerät (1) nach einem der oben stehenden Ansprüche, **dadurch gekennzeichnet, dass** der genannte Bypass (22) eine Klappe (25) enthält, die an dem genannten Abgasende (22.1) angeordnet ist und in der sich mindestens eine Öffnung (25.1) befindet, um die Menge des Abgases (5) zu kontrollieren und die kontrollierte Abgasrückführung (SEGR) zu gewährleisten.

5. Ein Heizgerät (1) nach Anspruch 4, **dadurch gekennzeichnet, dass** es einen Öffnungskontrollmechanismus enthält, der den Durchmesser der Öffnung (25.1) in der genannten Klappe (25) automatisch kontrollieren kann.

6. Ein Heizgerät (1) nach einem der oben stehenden Ansprüche, **dadurch gekennzeichnet, dass** es ein Magnetventil (20) enthält, das am genannten Bypass (22) angeordnet ist.

7. Ein Heizgerät (1) nach Anspruch 6, **dadurch gekennzeichnet, dass** es einen Ventilkontrollmechanismus enthält, der unter Berücksichtigung der Leistungsgewinne des Heizgerätes (1) die On-Off-Position des Magnetventils (20) automatisch kontrollieren kann.

8. Ein Heizgerät (1) nach einem der Ansprüche 1 bis 5, **dadurch gekennzeichnet, dass** es ein Dosierventil (20) enthält, das an dem genannten Bypass (22) angeordnet ist und seinen Öffnungsdurchmesser bei unterschiedlichen Heizkräften unter Verwendung eines Kontrollalgorithmus automatisch einstellt.

## Claims

1. Heating device (1) comprising the following: a heating chamber (7), which contains a burner (8), a gas-water heat exchanger (10) and a water pipe (13); a fan (16), which sucks in the mixture of gas (14) and fresh air (3) and transports it to the heating chamber (7) and is connected to the heating chamber (7); a mixing unit (15), which mixes the gas (14) and the fresh air (3) before it reaches the heating chamber (7); a fresh-air intake pipe (23), which transports the fresh air (3) to the mixing unit (15); a condensate collector (26), in which the condensed water (27) from the heating chamber (7) collects and which has a drain pipe (28), in order to drain away the excess water (27); an exhaust gas channel (24), which ensures that the exhaust gas (5) is discharged from the heating chamber (7) to the outside; an exhaust gas controller (17), which discharges the exhaust gas (5) from the heating chamber (7) into the exhaust gas channel (24); a flue pipe (2), which ensures the supply of fresh air (3) to the heating device (1) and at the same time the discharge of the exhaust gas (5) located therein; wherein it contains a bypass (22), which is arranged between the exhaust gas channel (24) and the fresh-air intake pipe (23), in order to direct part of the exhaust gas (5) that flows through said exhaust gas channel (24) to the fresh-air intake pipe (23) and to ensure the exhaust gas recirculation (EGR), **characterized in that** the heating device contains a hydraulic unit (29) and a gas valve, wherein the hydraulic unit contains a cold water inflow (11) to the heating chamber (7) and a warm water outflow (12) from the chamber (7); and wherein the gas valve (7) controls the amount of gas (14) that flows into the heating chamber (7); and **in that** the condensate collector is formed as a siphon; and **in that** it also contains at least one selective membrane module (21), **in that** said membrane module (21) consists of membrane tubes (21.1), which are coated with a selective coating (21.2), which is only permeable to water vapour (H2O) and/or carbon dioxide (CO2) and **in that**
- said membrane module (21) is arranged in the bypass (22),
- said membrane module (21) is arranged in the part of the exhaust gas channel (24) in the direct vicinity of the outlet of the heating chamber (7) in the exhaust gas path (5) of the exhaust gas channel (24) (MA cross section),
- said membrane module (21) is integrated in the exhaust gas channel (24), which runs through the flue pipe (2) (MB cross section),
separately at one or more of these locations.

2. Heating device (1) according to Claim 1, **characterized in that** said bypass (22) has the form of a channel with a round cross section.

3. Heating device (1) according to Claim 1 or 2, **characterized in that** said bypass (22) has at least one exhaust gas end (22.1), which reaches into the exhaust gas channel (24), and a fresh air end (22.2), which is connected to the fresh-air intake pipe (23).

4. Heating device (1) according to one of the preceding claims, **characterized in that** said bypass (22) contains a flap (25), which is arranged at said exhaust gas end (22.1) and in which there is at least one opening (25.1), in order to control the amount of exhaust gas (5) and ensure the controlled exhaust gas recirculation (SEGR).

5. Heating device (1) according to Claim 4, **characterized in that** it contains an opening control mechanism, which can automatically control the diameter of the opening (25.1) in said flap (25).

6. Heating device (1) according to one of the preceding claims, **characterized in that** it contains a solenoid valve (20), which is arranged on said bypass (22).

7. Heating device (1) according to Claim 6, **characterized in that** it contains a valve control mechanism, which can automatically control the on-off position of the solenoid valve (20) while taking into account the increases in performance of the heating device (1).

8. Heating device (1) according to one of Claims 1 to 5, **characterized in that** it contains a metering valve (20), which is arranged on said bypass (22) and automatically sets its opening diameter for different heating powers by using a control algorithm.

## Revendications

1. Appareil de chauffage (1) comprenant :
une chambre de chauffe (7) qui contient un brûleur (8), un échangeur de chaleur gaz-eau (10) et un tube à eau (13),
un ventilateur (16) qui aspire le mélange de gaz (14) et d'air frais (3), qui le transporte vers la chambre de chauffe (7) et qui est raccordé à la chambre de chauffe (7),
une unité de mélange (15) qui mélange le gaz (14) et l'air frais (3) avant qu'ils arrivent dans la chambre de chauffe (7),
un tube (23) d'aspiration d'air frais qui transporte l'air frais (3) vers l'unité de mélange (15),
un collecteur de condensats (26) qui recueille l'eau de condensation (27) provenant de la chambre de chauffe (7) et qui présente un tube d'évacuation (28) qui évacue l'eau (27) en excès,
un canal (24) de gaz de fumée qui garantit que les gaz de fumée (5) provenant de la chambre de chauffe (7) soient guidés vers l'extérieur,
un régulateur (17) de gaz de fumée qui conduit dans le canal (24) à gaz de fumée les gaz de fumée (5) provenant de la chambre de chauffe (7),
un conduit de cheminée (2) qui assure l'apport d'air frais (3) à l'appareil de chauffage (1) et simultanément l'évacuation des gaz de fumée (5) qui y sont présents,
l'appareil de chauffage présentant une dérivation (22) disposée entre le canal (24) à gaz de fumée et le tube (23) d'aspiration d'air frais pour amener une partie des gaz de fumée (5) qui s'écoule dans ledit canal (24) à gaz de fumée vers le tube (23) d'aspiration d'air frais et garantir une recirculation des gaz de fumée (EGR),
**caractérisé en ce que**
l'appareil de chauffage contient une unité hydraulique (29) et une soupape à gaz, l'unité hydraulique contenant une amenée (11) d'eau froide vers la chambré de chauffe (7) et une évacuation (12) d'eau chaude hors de la chambre (7) et la soupape (7) à gaz régulant la quantité de gaz (14) qui s'écoule dans la chambre de chauffe (7),
**en ce que** le collecteur de condensats est configuré comme siphon,
**en ce qu'**il contient en outre au moins un module sélectif (21) à membrane,
**en ce que** ledit module (21) à membrane est constitué de tubes (21.1) à membrane revêtus d'un revêtement sélectif (21.2) qui n'est perméable qu'à la vapeur d'eau (H2O) et/ou au dioxyde de carbone (CO2),
**en ce que** ledit module (21) à membrane est disposé dans la dérivation (22),
**en ce que** ledit module (21) à membrane est disposé dans la partie du canal (24) de gaz d'échappement située à proximité immédiate de la sortie de la chambre de chauffe (7) dans le parcours (5) des gaz de fumée du canal (24) de gaz de fumée (section transversale MA) et
**en ce que** ledit module (21) à membrane intégré dans le canal (24) à gaz de fumée qui s'étend dans le conduit de cheminée (2) (section transversale MB) est disposé séparément en un ou plusieurs de ces emplacements.

2. Appareil de chauffage (1) selon la revendication 1, **caractérisé en ce que** ladite dérivation (22) présente la forme d'un canal de section transversale circulaire.

3. Appareil de chauffage (1) selon les revendications 1 ou 2, **caractérisé en ce que** ladite dérivation (22) possède au moins une extrémité (22.1) à gaz de fumée qui pénètre dans le canal (24) à gaz de fumée et une extrémité (22.2) à air frais qui est raccordée au tube (23) d'aspiration d'air frais.

4. Appareil de chauffage (1) selon l'une des revendications précédentes, **caractérisé en ce que** ladite dérivation (22) contient un clapet (25) disposé à ladite extrémité (22.1) à gaz de fumée et présentant au moins une ouverture (25.1) qui contrôle le débit de gaz de fumée (5) et garantit la recirculation contrôlée des gaz de fumée (SEGR).

5. Appareil de chauffage (1) selon la revendication 4, **caractérisé en ce qu'**il contient un mécanisme de contrôle d'ouverture qui peut contrôler automatiquement le diamètre de l'ouverture (25.1) ménagée dans ledit clapet (25).

6. Appareil de chauffage (1) selon l'une des revendications précédentes, **caractérisé en ce qu'**il contient une soupape magnétique (20) disposée sur ladite dérivation (22).

7. Appareil de chauffage (1) selon la revendication 6, **caractérisé en ce qu'**il contient un mécanisme de contrôle de soupape qui peut contrôler automatiquement la position marche-arrêt de la soupape magnétique (20) en tenant compte de la puissance délivrée par l'appareil de chauffage (1).

8. Appareil de chauffage (1) selon l'une des revendications 1 à 5, **caractérisé en ce qu'**il contient une soupape doseuse (20) disposée sur ladite dérivation (22) et dont le diamètre d'ouverture s'établit automatiquement selon différentes puissances de chauffe par recours à un algorithme de contrôle.
